Europäisches Patentamt

**European Patent Office**

Office européen des brevets

(19)

(11) Veröffentlichungsnummer: **0 014 883**
**B1**

(12) **EUROPÄISCHE PATENTSCHRIFT**

(45) Veröffentlichungstag der Patentschrift:
09.02.83

(51) Int. Cl.³: **C 08 F 299/04**, C 09 D 3/68,
**C 08 L 67/06**

(21) Anmeldenummer: **80100545.5**

(22) Anmeldetag: **04.02.80**

(54) **Wässrige Polyesteremulsionen, Verfahren zu ihrer Herstellung und ihre Verwendung zur Herstellung von Lacken für besonders dünnschichtige Überzüge.**

(30) Priorität: **14.02.79 DE 2905666**

(43) Veröffentlichungstag der Anmeldung:
**03.09.80 Patentblatt 80/18**

(45) Bekanntmachung des Hinweises auf die Patenterteilung:
**09.02.83 Patentblatt 83/6**

(84) Benannte Vertragsstaaten:
**AT BE CH DE FR GB IT NL SE**

(56) Entgegenhaltungen:
**EP-A-0 003 337**
**DE-A-1 956 284**
**DE-A-2 221 335**
**DE-B-1 024 654**
**FR-A-1 234 630**
**US-A-3 499 855**

(73) Patentinhaber: **BAYER AG, Zentralbereich Patente, Marken und Lizenzen, D-5090 Leverkusen 1, Bayerwerk (DE)**

(72) Erfinder: **Frank, Walter, Doerperhofstrasse 14, D-4150 Krefeld (DE)**
Erfinder: **Bendszus, Otto, Breitestrasse 92, D-4150 Krefeld (DE)**
Erfinder: **Freier, Hans-Joachim, Dr., Campendonckstrasse 5, D-4150 Krefeld (DE)**
Erfinder: **Traenckner, Hans-Joachim, Dr., Wedelstrasse 46, D-4150 Krefeld (DE)**

**0 014 883**

## Wäßrige Polyesteremulsionen, Verfahren zu ihrer Herstellung und ihre Verwendung zur Herstellung von Lacken für besonders dünnschichtige Überzüge

Die vorliegende Erfindung betrifft wäßrige Emulsionen auf Basis ungesättigter Polyester zur Herstellung besonders dünnschichtiger Überzüge auf Holz, holzähnlichen Stoffen oder Holzimitationen (Maserdruck, Dekorfolien).

Dünnschichtige Überzüge werden bei der Möbelfertigung u. a. in Form von Abgießmattinen auf durch Spachteln und Maserdruck (Holzimitation) vorbehandelte Spanplatten als Abschluß des Lackierprozesses aufgetragen. Insbesondere für die sogenannte offenporige Lackierung sind sehr dünne Beschichtungen erwünscht.

Unter offenporiger Beschichtung versteht man eine dünnschichtige (meist matte) Lackierung, bei der sich der geschlossene Lackfilm der Porenstruktur und Maserung des Holzes eng anpaßt und die natürliche Eigenart der Holzoberfläche erhalten bleibt. Offenporige Beschichtungen verwendet man hauptsächlich zur Möbellackierung. Die gebräuchlichen Beschichtungsmittel sind Nitrocelluloselacke, deren nur physikalisch getrocknete Lackfilme allerdins keine Lösungsmittelbeständigkeit besitzen. Dieser Nachteil wird durch Beschichtungsmittel auf Basis ungesättigter Polyester vermieden.

Dünnschichtige bzw. offenporige Überzüge können aus ungesättigten Polyesterharzen mit hohem Monomerengehalt bei stark thixotroper Einstellung des Lackes hergestellt werden (DE-OS 2 623 960). Das in solchen Lacken als Monomeres fast ausschließlich verwendete Styrol copolymerisiert bei der Filmhärtung mit den ungesättigten Polyestern, so daß im Vergleich zur Nitrolackbeschichtung vernetzte, also unlösliche, Lackierungen mit hohem Gebrauchswert entstehen. Verdunstungsverluste an monomerem Styrol während der Verarbeitung, z. B. auf der Gießmaschine und zu Beginn der Filmhärtung, sind dabei jedoch unvermeidbar. Ihre Entfernung aus der Abluft der Fabrikationshallen und Trockenanlagen ist wegen der enormen umzuwälzenden Luftmengen sehr kostspielig.

Aufgabe der vorliegenden Erfindung war es, Überzugsmittel auf Basis ungesättigter Polyester für besonders dünne Beschichtungen auf Holz, holzähnlichen Stoffen oder Holzimitationen bereitzustellen, die die obengenannten Nachteile nicht aufweisen und die insbesondere bei Applizierung in extrem dünner Schicht keine Verlaufsstörungen zeigen.

Aus der GB-PS 1 076 319 ist es bekannt, Polyester mit endständig einkondensierten Polyalkylenglykoleinheiten als Emulgatoren für die Herstellung von Wasser-in-Öl-Emulsionen, basierend auf ungesättigten (monomerhaltigen) Polyestern und/oder polymerisierbaren Monomeren und inerten organischen Lösungsmitteln, einzusetzen. Die erhaltenen Emulsionen können zur Herstellung von Schmiermitteln, hydraulischen Flüssigkeiten oder von Polymeren dienen.

Aus der US-PS 3 499 855 sind wäßrige Überzugsmittel auf Basis zweier verschiedener Polyester bekannt, wobei einer der Polyester frei von Resten ungesättigter Dicarbonsäuren ist, die Polyester durch Neutralisation wasserlöslich gemacht werden, ohne Hilfslösungsmittel einwandfreie Beschichtungen offenbar nicht erhalten werden und die Trocknung dieser Überzugsmittel in Gegenwart von Sikkativen, aber in Abwesenheit von Peroxiden erfolgt. Demgegenüber ist es neu, monomerfreie Polyester, die ungesättigte Dicarbonsäurereste und Allylethergruppen enthalten — also für lufttrocknende Lacke prädestiniert erscheinen — in Gegenwart von Sperrmitteln, aber ohne Neutralisation und in Abwesenheit von Hilfslösungsmitteln in Wasser zu emulgieren und mit radikalischen Initiatoren zu härten. Es erscheint besonders überraschend, daß diese neue Technik zu dünnschichtigen verlaufsstörungsfreien Überzügen führt.

Überraschenderweise wurde nun gefunden, daß sperrmittelhaltige monomerfreie wäßrige Emulsionen eines Gemisches mindestens zweier $\alpha,\beta$-ethylenisch ungesättigter Polyester, von denen der eine Polyester $\beta,\gamma$-ethylenisch ungesättigte Ethergruppen, aber keine einkondensierten Reste höherer Polyalkylenglykole, der andere Polyester dagegen keine $\beta,\gamma$-ethylenisch ungesättigten Ethergruppen, aber einkondensierte Reste höherer Polyalkylenglykole und monofunktioneller Alkohole und/oder Carbonsäuren enthält, zur Herstellung extrem dünnschichtiger Überzüge ohne Verlaufsstörungen hervorragend geeignet sind.

Es war insbesondere überraschend, daß der in Abwesenheit copolymerisierbarer Monomer nicht härtbare Polyalkylenoxidreste enthaltende Polyester in Gegenwart $\beta,\gamma$-ethylenisch ungesättigte Ethergruppen enthaltender $\alpha,\beta$-ungesättigter Polyester monomerenfrei zu kratz- und wasserfesten Überzügen gehärtet werden kann.

Gegenstand der Erfindung sind also monomerfreie wäßrige Emulsionen aus

A. 10−90, vorzugsweise 35−70 Gew.-% Mischungen $\alpha,\beta$-ethylenisch ungesättigter Polyester mit Säurezahlen von 1−40, OH-Zahlen von 10−20 und als Zahlenmittel bestimmten Molekulargewichten von 300−5000,

B. 9,95−83, vorzugsweise 29,95−78 Gew.-% Wasser,

C. 0,05−2 Gew.-% Sperrmittel und gegebenenfalls

D. bis zu 5 Gew.-% Verdickungsmittel,

wobei sich die Gewichtsprozente jeweils auf die Summe der Komponenten A, B, C und D beziehen und die Polyestermischung A.

a) 50−95, vorzugsweise 70−90 Gew.-%, bezogen auf die Summe von a und b, mindestens eines $\alpha,\beta$-ethylenisch ungesättigten Polyesters, der pro 100 g Polyester a 0,2−0,8, vorzugsweise

2

0,3 – 0,7 Mol $\beta,\gamma$-ethylenisch ungesättigte Ethergruppen, aber keine einkondensierten Polyalkylenglykolreste eines Molekulargewichts von 250 – 2000 enthält, und

b) 5 – 50, vorzugsweise 10 – 30 Gew.-%, bezogen auf die Summe von a und b, mindestens eines $\alpha,\beta$-ethylenisch ungesättigten Polyesters enthält, der zu 25 – 90, vorzugsweise 30 – 80 Gew.-%, bezogen auf b, aus einkondensierten Polyalkylenglykolresten eines Molekulargewichts von 250 – 2000, vorzugsweise von 300 – 1000, besteht, dadurch gekennzeichnet, daß der Polyester b keine $\beta,\gamma$-ethylenisch ungesättigten Ethergruppen enthält, und pro 100 g Polyester b 0,02 – 0,2, vorzugsweise 0,07 – 0,14 Mol gesättigte aliphatische Endgruppen, vorzugsweise verzweigte, mit 6 bis 18, vorzugsweise 6 – 12 C-Atomen, die Reste von Monocarbonsäuren und/oder vorzugsweise monofunktionellen Alkoholen sind, enthält.

Ein weiterer Gegenstand der Erfindung ist ein Verfahren zur Herstellung von dünnschichtigen Überzügen, wonach man die erfindungsgemäßen monomerfreien wäßrigen Emulsionen mit einem Härtungskatalysator versieht und in Mengen entsprechend einer Trockenfilmschichtdicke bis zu 100 µm, vorzugsweise bis 30 µm, auf Holz oder einem holzähnlichen Substrat aufbringt, bei Temperaturen zwischen 20 und 150, vorzugsweise 40 und 100° C das Wasser abdunstet und bei gleicher oder höherer Temperatur, d. h. also zwischen 20 und 180, vorzugsweise 40 und 160° C oder mittels UV-Strahler bis zur Stapelfähigkeit härtet.

Ein weiterer Gegenstand der Erfindung ist die Verwendung der erfindungsgemäßen Emulsionen zur Herstellung von Lacken, insbesondere für dünnschichtige Überzüge.

»Monomerfrei« bedeutet erfindungsgemäß: frei von Monomeren, die mit den ungesättigten Polyestern a und b copolymerisierbar wären.

Das erfindungsgemäße Verfahren vermeidet die bei wäßrigen Emulsionen so schwer zu beeinflussenden Verlaufsstörungen des sich bildenden Lackfilmes und gestattet durch das Fehlen verdunstender organischer Lösungsmittel und Monomeren eine angenehmere Anfertigung dünnschichtiger Überzüge. Die Lackfilme besitzen selbst bei Auftragsmengen für Trockenfilm-Schichtdicken von 10 µm ein einwandfreies Fließverhalten.

Bevorzugte $\alpha,\beta$-ethylenisch ungesättigte Polyester a sind die Polykondensationsprodukte mindestens einer $\alpha,\beta$-ethylenisch ungesättigten Dicarbonsäure mit in der Regel 4 oder 5 C-Atomen oder deren esterbildende Derivate (z. B. Anhydride), gegebenenfalls in Abmischung mit bis zu 100 Mol-%, bezogen auf die ungesättigte Säurekomponente, mindestens einer aliphatischen gesättigten Dicarbonsäure mit 4 – 10 C-Atomen oder einer cycloaliphatischen oder aromatischen Dicarbonsäure mit 8 – 10 C-Atomen oder deren esterbildende Derivate (z. B. ihren Anhydriden), mit mindesetns einer Hydroxyverbindung, vorzugsweise Polyhydroxyverbindung mit 2 – 8 C-Atomen, deren nicht zur Polykondensation eingesetzten OH-Gruppen mindestens teilweise mit $\beta,\gamma$-ungesättigten Alkoholen veräthert sind, also Polyester, wie sie z. B. in der DE-AS 1 024 654 beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z. B. jedoch auch Mesaconsäure, Citraconsäure, Itaconsäure oder Chlormaleinsäure. Beispiele für die zu verwendenden aliphatischen gesättigten und cycloaliphatischen und aromatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z. B. Hexachlorendomethylentetrahydrophthalsäure, Tetrachlorphthalsäure oder Tetrabromphthalsäure verwendet werden. Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis(4-hydroxycyclohexyl)-propan, bis-oxalkyliertes Bisphenol A, Perhydrobisphenol und andere eingesetzt werden. Bevorzugt verwendet werden Ethylenglykol, Propandiol-1,2, Diethylenglykol und Dipropylenglykol.

Die $\alpha,\beta$-ethylenisch ungesättigten Polyester b enthalten außer den obengenannten Dicarbonsäureresten der Polyester a. Reste mindestens einer aliphatischen Monocarbonsäure und/oder monofunktionellen Alkohols und mindestens einer Polyhydroxyverbindung mit 2 – 8 C-Atomen, wovon mindestens eine Polyhydroxyverbindung eingebaute Polyalkylenglykolreste besitzt, die ein Molekulargewicht von 250 – 2000 aufweisen.

Bevorzugte gesättigte aliphatische monofunktionelle Alkohole sind Alkanole, Cycloalkanole und Cycloalkanalkanole, z. B. n-Hexanol, n-Octanol, n-Decanol, Laurol, Stearylalkohol, Hexahydrobenzylalkohol, vorzugsweise verzweigte Alkanole, wie 2-Ethylenhexanol-1- und Isononanole. Bevorzugte gesättigte aliphatische Monocarbonsäuren sind n-Octan-, n-Dodecan-, Stearin-, vorzugsweise 2-Ethylenhexansäure und Isononansäure. Bevorzugte Polyhydroxyverbindungen sind die oben für die Polyesterherstellung a genannten Diole, z. B. Ethylen-, Diethylenglykol, Propandiol-1,2 und -1,3, Butandiol-1,3 und -1,4, 2-Ethylpropandiol-1,3, Hexandiol-1,6. Höherwertige Polyhydroxyverbindungen sind wegen ihrer verzweigenden Wirkung nur in untergeordneten Mengen verwendbar. »Aliphatisch« in diesem Zusammenhang schließt »cycloaliphatisch« ein.

Die Polyalkylenglykolreste können in an sich bekannter Weise über Polyalkylenglykol bei der Polyesterherstellung einkondensiert werden oder, wie in der GB-PS 1 076 319 beschrieben, durch Anlagerung der entsprechenden Alkylenoxide an die OH- bzw. COOH-Gruppen einer Polyestervorstufe ankondensiert werden. Es sind jedoch auch gemsichte Polyalkylenglykolreste geeignet, z. B. Ethylenoxid/Propylenoxid-Mischäther mit Propylenoxidgehalten unter 50 Mol-%. Bevorzugte Polyalkylenglykole sind solche, bei denen die Sauerstoffatome durch mindestens 2 Kohlenstoffatome, insbesondere 2–4 Kohlenstoffatome, getrennt sind. Besonders bevorzugte Polyalkylenglykole sind Polyethylenglykole.

Die Säurezahlen der Polyester sollen 1–40, vorzugsweise 10–30 und die OH-Zahlen 10–120, vorzugsweise 30–80 und die als Zahlenmittel bestimmten Molekulargewichte 300–5000, vorzugsweise 500–2000, betragen.

Um die erfindungsgemäßen Emulsionen vor unerwünschter vorzeitiger Polymerisation zu bewahren, empfiehlt es sich, bereits bei der Herstellung der ungesättigten Polyester 0,001–0,1 Gew.-%, bezogen auf die Komponente A, Polymerisationsinhibitoren oder Antioxidantien zuzusetzen.

Bevorzugte Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1–6 C-Atomen enthalten, Amine, vorzugsweise sekundäre Arylamine und ihre Derivate, Chinone, Kupfersalze organischer Säuren, Anlagerungsverbindungen von Kupfer(I)-halogeniden an Phosphite; Verbindungen, wie sie auch in »Methoden der organischen Chemie« (Houben–Weyl), 4. Auflage, Band XIV/1, S. 433–452, 756, Georg-Thieme-Verlag, Stuttgart, 1961, beschrieben sind. Sehr gut geeignet sind z. B. Hydrochinon und p-Benzochinon in einer Konzentration von 0,01 bzw. 0,05 Gew.-%, bezogen auf die Komponente A.

Bevorzugte Sperrmittel C sind Wachse und vorzugsweise Paraffine mit einem Schmelzpunkt zwischen 35 und 100, vorzugsweise 40–80°C. Sie werden den erfindungsgemäßen Emulsionen vorzugsweise in Form wäßriger Dispersionen zugesetzt und verhindern die Inhibierung der Polymerisation durch den Sauerstoff der Luft.

Verdickungsmittel D, erforderlich besonders bei dünnflüssigen Öl-in-Wasser-Emulsionen zur Erzeugung der benötigten Verarbeitungsviskosität der erfindungsgemäßen Emulsionen, sind in Karsten, Lackrohstofftabellen, 6. Auflage, 1976, Abs. 42.28, »Verdickungsmittel«, aufgeführt; bevorzugt sind Cellulosederivate, z. B. Methylcellulose und Verdicker auf Urethanbasis sowie spezielle Montmorillonite. Sie können sowohl dem Polyestergemisch oder dem Wasser vor dem Emulgieren zugesetzt als auch nachträglich in die fertige Emulsion zur Nachdickung eingerührt werden.

Die Herstellung der erfindungsgemäßen Emulsion kann durch Einrühren des Wassers B in das Polyestergemisch A, z. B. durch einfaches Rühren oder mittels Dissolver, erfolgen. Zur Ausbildung einer feinteiligeren Emulsion, d. h. zur besseren Einbringung der Scherkräfte, ist portionsweiser Wasserzusatz bei Temperaturen unter 30°C vorteilhaft. Es werden sowohl Wasser-in-Öl- als auch Öl-in-Wasser-Emulsionen gebildet.

Die Härtung kann auf an sich bekannte Weise mit Hilfe von polymerisationsauslösenden Radikalbildnern erfolgen (vgl. z. B. Wagner/Sarx, Lackkunstharze, Kapitel: Ungesättigte Polyesterharze, 5. Aufl., Verlag Carl Hanser, Stuttgart, 1971). Bevorzugt werden wasserlösliche Peroxide, wie Wasserstoffperoxid und Acetylacetonperoxid, weiter Methylethylketonhydroperoxid, Cyclohexanonhydroperoxid oder die wäßrigen Emulsionen der nicht wasserlöslichen Initiatoren eingesetzt. Bevorzugte Beschleuniger sind z. B. die Schwermetallsalze von Carbonsäuren oder die Chelate dieser Metalle wie die Acetate, Naphthenate oder Acetylacetonate von Cobalt, Mangan oder Vanadium. Auch die Beschleuniger können entweder, falls sie wasserlöslich sind, in Form ihrer wäßrigen Lösungen, andernfalls als wäßrige Emulsionen zugesetzt werden.

Übliche Mengen, d. h. 0,5–5 Gew.-% Peroxid, 0,01–0,2 Gew.-% Sikkativmetall, bezogen auf Komponente A gewährleisten in der Regel eine ausgezeichnete Härtung.

Die Härtung mit UV-Strahlen bei Zusatz der bekannten Initiatoren (H. G. Heine et al., Aromatische Ketonverbindungen als Initiatoren bei Photopolymerisationen, Angew. Chem., A, 84/1972, S. 1032–1036) kann erst nach Wasserabgabe des Lackfilms erfolgen.

Zum Schutz von lichtempfindlichen Untergründen, z. B. hellen Hölzern, können den Überzugsmassen geringe Mengen der üblichen UV-Absorber zugesetzt werden, z. B. 2-Hydroxy-4-methoxybenzophenon, oder die üblicherweise verwendeten Zimtsäure- und Benzotriazinderivate.

Übliche Zuschlags- und Farbstoffe, Konservierungs-, Mattierungs- und Verlaufsmittel sowie Pigmente können zur Erzielung spezieller Effekte ebenfalls zugesetzt werden, sofern sie die Emulsionsstabilität und die Polymerisation nicht wesentlich beeinflussen.

Aus den erfindungsgemäßen Emulsionen hergestellte Lacke eignen sich hervorragend zur Verarbeitung auf den herkömmlichen mit Gießmaschinen ausgerüsteten Lackierstraßen, z. B. nach dem Aktivgrundverfahren (vgl. DE-AS 1 025 302), und infolge langer offener Verarbeitungszeiten auch zum Gießen in katalytischer und sikkativierter Form.

Weiter lassen sich die aus den erfindungsgemäßen Emulsionen hergestellten Lacke auch durch Walzen und Spritzen nach den bekannten Methoden (Wagner/Sarx, Lackkunstharze, 5. Aufl., Verlag Carl Hanser, 1971, S. 140, 141, und Weigel, Katalytische Lackhärtung und ihre Rohstoffe, Wissenschaftliche Verlagsgesellschaft, 1962, S. 192–202) auftragen.

Die nachfolgenden Beispiele sollen die Erfindung erläutern:

## Beispiele

Die Polyester nachstehender Zusammensetzung (in Mol) und Kennzahlen wurden in den erfindungsgemäßen Emulsionen verwendet:

| | Polyester a | | | |
| --- | --- | --- | --- | --- |
| | $a_1$ | $a_2$ | $a_3$ | $a_4$ |
| Maleinsäureanhydrid | 1,0 | 0,67 | 1,0 | 1,0 |
| Adipinsäure | — | 0,33 | — | — |
| Propandiol-1,2 | 0,55 | 0,55 | 0,55 | — |
| 2-Ethylpropandiol-1,3 | — | — | — | 0,51 |
| Benzylalkohol | 0,5 | — | — | — |
| Trimethylolpropandiallylether | 0,5 | 1,0 | 1,0 | 1,0 |
| Säurezahl | 22 | 16 | 20 | 10 |
| Viskosität [mPa · s], gemessen 70 gew.-%ig in Styrol bei 20°C | 316 | 110 | 120 | 141 |

| | Polyester b | | | | |
| --- | --- | --- | --- | --- | --- |
| | $b_1$ | $b_2$ | $b_3$ | $b_4$ | $b_5$ |
| Maleinsäureanhydrid | 1,0 | 1,0 | 1,0 | 1,0 | 1,0 |
| 2-Ethylhexansäure | — | — | — | — | 0,6 |
| Polyethylenglykol (MG 400) | 0,86 | 0,86 | 0,86 | 0,86 | 1,5 |
| 2-Ethylenhexanol-1 | 0,47 | — | — | — | — |
| n-Octanol | — | 0,43 | — | — | — |
| Trimethyl-1-hexanol (Gemisch aus 2.4.4- und 3.5.5-Isomeren ca. 1 : 1) | — | — | 0,43 | — | — |
| n-Dodecylalkohol | — | — | — | 0,43 | — |
| Säurezahl | 18 | 12 | 12 | 13 | 5 |
| Viskosität [mPa · s] | 3000 | 3900 | Kristall-brei | 7050 | 2200 |

Zusammensetzung und Herstellung der erfindungsgemäßen Emulsionen (in Gewichtsteilen):

| | Beispiel | | | | | |
|---|---|---|---|---|---|---|
| | 1 | 2 | 3 | 4 | 5 | 6 |
| Polyester | | | | | | |
| a$_1$ | 80 | | | | | |
| a$_2$ | | | | 80 | | |
| a$_3$ | | | 80 | | | 80 |
| a$_4$ | | 82 | | | 80 | |
| b$_1$ | 20 | 18 | | | | |
| b$_2$ | | | 20 | | | |
| b$_3$ | | | | 20 | | |
| b$_4$ | | | | | 20 | |
| b$_5$ | | | | | | 20 |
| Wasser | 100 | 100 | 100 | 100 | 100 | 100 |
| Verdickungsmittel | — | 2 | — | — | 2 | — |
| Sperrmittel-Dispersion | 4 | 4 | 4 | 4 | 4 | 4 |

Zur Herstellung der Emulsionen wurden die Polyestermischungen a+b mittels Dissolver bei 8000 UpM bei Temperaturen bis max. 40°C mit Wasser für einen Festkörpergehalt von 70 Gew.-% emulgiert und anschließend mit Wasser oder Wasser-Verdickungsmittelaufschluß auf 50 Gew.-% Festkörpergehalt bei 1000 UpM verdünnt.
Verdickungsmittel: Montmorillonitderivat

### Sperrmittel-Dispersion

10 Gew.-Teile Paraffin (Fp. 57−60°C), emulgiert in 90 Gew.-Teilen 6gew.-%iger wäßriger Polyvinylalkohollösung (Polyvinylalkohol: Verseifungszahl 140, Viskosität: 25 mPa · s, gemessen als 4gew.-%ige wäßrige Lösung bei 20°C).
Die vorgenannten Emulsionen wurden mit der Sperrmitteldispersion versetzt, katalysiert mit 3 Gew.-% H$_2$O$_2$ (35gew.-%ig) und sikkativiert mit 2 Gew.-% wäßriger Co-acetatlösung (ca. 5 Gew.-% Metall), zur Verlaufskontrolle auf Glasplatten so aufgezogen, daß 10−20 μm Trockenfilmstärken resultieren. Bereits bei der Aushärtung bei Raumtemperatur werden einwandfrei verlaufende, kraterfreie Lackfilme guter Kratzfestigkeit erhalten.

### Patentansprüche

1. Monomerfreie wäßrige Emulsionen aus
A.   10−90 Gew.-% Mischungen α,β-ethylenisch ungesättigter Polyester mit Säurezahlen von 1−40, OH-Zahlen von 10−20 und als Zahlenmittel bestimmten Molekulargewichten von 300−5000,
B.   9,95−83 Gew.-% Wasser,
C.   0,05−2 Gew.-% Sperrmittel und gegebenenfalls
D.   bis zu 5 Gew.-% Verdickungsmittel,
wobei sich die Gewichtsprozente jeweils auf die Summe der Komponenten A, B, C und D beziehen und die Polyestermischung A.
a.   50−95 Gew.-%, bezogen auf die Summe von a und b, mindestens eines α,β-ethylenisch ungesättigten Polyesters, der pro 100 g Polyester a. 0,2−0,8 Mol β,γ-ethylenisch ungesättigte Ethergruppen, aber keine einkondensierten Polyalkylenglykolreste eines Molekulargewichts von 250 – 2000 enthält, und

b. 5 – 50 Gew.-%, bezogen auf die Summe von a und b, mindestens eines $\alpha,\beta$-ethylenisch ungesättigten Polyesters enthält, der zu 25 – 90 Gew.-%, bezogen auf b, aus einkondensierten Polyalkylenglykolresten eines Molekulargewichts von 250 – 2000 besteht, dadurch gekennzeichnet, daß der Polyester b. keine $\beta,\gamma$-ethylenisch ungesättigten Ethergruppen enthält, und pro 100 g Polyester b 0,02 – 0,2 Mol gesättigte aliphatische Endgruppen, die Reste von Monocarbonsäuren und/oder monofunktionellen Alkoholen sind, enthält.

2. Emulsionen nach Anspruch 1, dadurch gekennzeichnet, daß sie

A. 35 – 70 Gew.-% Mischungen $\alpha,\beta$-ethylenisch ungesättigter Polyester,

B. 29,95 – 78 Gew.-% Wasser,

C. 0,05 – 2 Gew.-% Sperrmittel und gegebenenfalls

D. bis zu 5 Gew.-% Verdickungsmittel enthalten.

3. Emulsionen nach Ansprüchen 1 und 2, dadurch gekennzeichnet, daß die Polyestermischung A zu 70 – 90 Gew.-% aus Polyester a und zu 10 – 30 Gew.-% aus Polyester b besteht.

4. Emulsionen nach Ansprüchen 1 – 3, dadurch gekennzeichnet, daß 100 g Polyester a 0,3 – 0,7 Mol $\beta,\gamma$-ethylenisch ungesättigte Äthergruppen enthalten.

5. Emulsionen nach Anspruch 1, dadurch gekennzeichnet, daß Polyester b zu 30 – 80 Gew.-% aus einkondensierten Polyalkylenglykolreste eines Molekulargewichts von 300 – 1000 besteht.

6. Emulsionen nach Ansprüchen 1 – 5, dadurch gekennzeichnet, daß die Polyalkylenglykolreste Polyethylenglykolreste sind.

7. Emulsionen nach Ansprüchen 1 – 6, dadurch gekennzeichnet, daß 100 g Polyester b 0,07 – 0,14 Mol gesättigter aliphatischer Endgruppen enthalten.

8. Emulsionen nach Ansprüchen 1 – 7, dadurch gekennzeichnet, daß die gesättigten aliphatischen Endgruppen des Polyesters b 6 – 18 C-Atome enthalten.

9. Verfahren zur Herstellung von dünnschichtigen Überzügen, wonach man die monomerfreie wäßrige Emulsion nach Ansprüchen 1 – 8 mit einem Härtungskatalysator versieht und in Mengen entsprechend einer Trockenfilmschichtdicke bis zu 100 µm auf Holz oder einem holzähnlichen Substrat aufbringt, bei Temperaturen zwischen 20 und 150°C antrocknet und bei gleicher oder höherer Temperatur, d. h. also zwischen 20 und 180°C, oder mittels UV-Strahler bis zur Stapelfähigkeit härtet.

10. Verwendung der Emulsion nach Ansprüchen 1 – 8 zur Herstellung von Lacken, insbesondere für dünnschichtige Überzüge auf Holz, holzähnlichen Stoffen oder Holzimitationen.


**Claims**

1. Monomer-free aqueous emulsions of

A. 10 – 90% by weight of mixtures of $\alpha,\beta$-ethylenically unsaturated polyesters having acid numbers of 1 – 40, OH numbers of 10 – 20 and molecular weights, determined as the number-average, of 300 – 5,000,

B. 9.95 – 83% by weight of water,

C. 0.05 – 2% by weight of a barrier agent and, if appropriate,

D. up to 5% by weight of a thickener,

the percentages by weight in each case relating to the sum of components A, B, C and D, and the polyester mixture A. containing

a) 50 – 95% by weight, relative to the sum of a and b, of at least one $\alpha,\beta$-ethylenically unsaturated polyester which contains, per 100 g of polyester a, 0.2 – 0.8 mol of $\beta,\gamma$-ethylenically unsaturated ether groups, but no co-condensed polyalkylene glycol radicals having a molecular weight of 250 – 2,000, and

b) 5 – 50% by weight, relative to the sum of a and b, of at least one $\alpha,\beta$-ethylenically unsaturated polyester which consists to the extent of 25 – 90% by weight, relative to b), of co-condensed polyalkylene glycol radicals having a molecular weight of 250 – 2,000, characterised in that the polyester b) contains no $\beta,\gamma$-ethylenically unsaturated ether groups and contains, per 100 g of polyester b), 0.02 – 0.2 mol of saturated aliphatic end groups which are radicals of monocarboxylic acids and/or monofunctional alcohols.

2. Emulsions according to Claim 1, characterised in that they contain

A. 35 – 70% by weight of mixtures of $\alpha,\beta$-ethylenically unsaturated polyesters,

B. 29.95 – 78% by weight of water,

C. 0.05 – 2% by weight of a barrier agent and, if appropriate,

D. up to 5% by weight of a thickener.

3. Emulsions according to Claim 1 and 2, characterised in that the polyester mixture A consists to the extent of 70 – 90% by weight of polyester a and to the extent of 10 – 30% by weight of polyester b.

4. Emulsions according to Claims 1 – 3, characterised in that 100 g of polyester a contains 0.3 – 0.7 mol of $\beta,\gamma$-ethylenically unsaturated ether groups.

5. Emulsions according to Claim 1, characterised in that polyester b consists to the extent of 30 – 80% by weight of co-condensed polyalkylene glycol radicals having a molecular weight of 300 – 1,000.

6. Emulsions according to Claims 1—5, characterised in that the polyalkylene glycol radicals are polyethylene glycol radicals.

7. Emulsions according to Claims 1—6, characterised in that 100 g of polyester b contain 0.07—0.14 mol of satured aliphatic end groups.

8. Emulsions according to Claims 1—7, characterised in that the saturated aliphatic end groups of the polyester b contain 6—18 C atoms.

9. Process for the preparation of thin-layered coatings in which the monomer-free aqueous emulsion according to Claims 1—8 is provided with a hardening catalyst, is applied to wood or a wood-like substrate in amounts corresponding to a dry film thickness of up to 100 $\mu$m, is dried at temperatures between 20 and 150°C and is hardened at the same or a higher temperature, that is to say, therefore, between 20 and 180°C, or by means of a UV lamp, until the substrate is capable of being stacked.

10. Use of the emulsion according to Claims 1—8 for the preparation of lacquers, in particular for thin-layered coatings on wood, wood-like substances or imitation woods.

## Revendications

1. Emulsions aqueuses exemptes de monomères, consistant en
A.   10—90% en poids de mélanges de polyesters à insaturation $\alpha,\beta$-éthylénique, ayant des indices d'acide de 1—40, des indices d'OH de 10—20 et des poids moléculaires moyens en nombre de 300—5000,
B.   9,95—83% en poids d'eau,
C.   0,05—2% en poids d'agents bloquants et, éventuellement,
D.   jusqu'à 5% en poids d'agents épaississants,
dans lesquelles les pourcentages en poids se rapportent chaque fois à la somme des composants A, B, C et D et le mélange de polyesters A contient
a.   50—95% en poids, par rapport à la somme de a et b, d'au moins un polyester à insaturation $\alpha,\beta$-éthylénique, qui, pour 100 g de polyester a, contient 0,2—0,8 mole de groupes éther à insaturation $\beta,\gamma$-éthylénique, mais pas de restes polyalkylèneglycols condensés d'un poids moléculaire de 250—2000 et
b.   5—50% en poids, par rapport à la somme de a et b, d'au moins un polyester à insaturation $\alpha,\beta$-éthylénique, qui consiste pour 25—90% en poids, par rapport à b, de restes polyalkylèneglycols condensés d'un poids moléculaire de 250—2000,
caractérisées en ce que le polyester b ne contient pas de groupes éther à insaturation $\beta,\gamma$-éthylénique et contient, pour 100 g du polyester b, 0,02—0,2 mole de groupes terminaux aliphatiques saturés, qui sont des restes d'acides monocarboxyliques et/ou d'alcools monofonctionnels.

2. Emulsions selon la revendication 1, caractérisées en ce qu'elles contiennent
A.   35—70% en poids de mélanges de polyesters à insaturation $\alpha,\beta$-éthylénique,
B.   29,95—78% en poids d'eau,
C.   0,05—2% en poids d'agents bloquants et, éventuellement,
D.   jusqu'à 5% en poids d'agents épaississants.

3. Emulsions selon les revendications 1 et 2, caractérisées en ce que le mélange de polyesters A consiste pour 70—90% en poids en polyesters a et pour 10—30% en poids en polyesters b.

4. Emulsions selon les revendications 1 à 3, caractérisées en ce que 100 g de polyester a contiennent 0,3—0,7 mole de groupes éther à insaturation $\beta,\gamma$-éthylénique.

5. Emulsions selon la revendication 1, caractérisées en ce que le polyester b consiste pour 30—80% en poids en restes polyalkylèneglycols condensés d'un poids moléculaire de 300—1000.

6. Emulsions selon les revendications 1—5, caractérisées en ce que les restes polyalkylèneglycols sont des restes polyéthylèneglycols.

7. Emulsions selon les revendications 1 à 6, caractérisées en ce que 100 g de polyester b contiennent 0,07—0,14 mole de groupes terminaux aliphatiques saturés.

8. Emulsions selon les revendications 1 à 7, caractérisées en ce que les groupes terminaux aliphatiques saturés du polyester b contiennent 6 à 18 atomes de carbone.

9. Procédé pour la fabrication de revêtements en couche mince, dans lequel on ajoute un catalyseur de durcissement à l'émulsion aqueuse exempte de monomères selon les revendications 1 à 8, et on l'applique sur du bois ou un support semblable au bois en quantités correspondant à une épaisseur de couche du film sec allant jusqu'à 100 $\mu$m, on sèche à des températures comprises entre 20 et 150°C et on durcit à la même température ou à une température plus élevée, c'est-à-dire donc entre 20 et 180°C, ou au moyen de sources d'UV jusqu'à ce qu'on puisse empiler les substrats revêtus.

10. Utilisation de l'émulsion selon les revendications 1 à 8, pour la fabrication de laques, en particulier pour des revêtements en couche mince sur du bois, des substances semblables au bois ou des imitations du bois.